Europäisches Patentamt

(19) European Patent Office

Office européen des brevets

(11) Publication number: **0 069 408**
A2

(12) **EUROPEAN PATENT APPLICATION**

(21) Application number: 82200716.7

(22) Date of filing: 10.06.82

(51) Int. Cl.³: **G 01 V 1/04**

(30) Priority: 06.07.81 GB 8120858

(43) Date of publication of application:
12.01.83 Bulletin 83/2

(84) Designated Contracting States:
DE FR NL

(71) Applicant: SHELL INTERNATIONALE RESEARCH
MAATSCHAPPIJ B.V.
Carel van Bylandtlaan 30
NL-2596 HR Den Haag(NL)

(72) Inventor: De Kok, Robbert Jasper
Volmerlaan 6
NL-2288 GD Rijswijk(NL)

(74) Representative: Puister, Antonius Tonnis, Mr. et al,
P.O. Box 302
NL-2501 CH The Hague(NL)

(54) Seismic vibrator control.

(57) An apparatus for the control of vibratory seismic source, said sources comprising at least a vibrator provided with a reaction mass and a coupling plate, the movement of which is responsive to an electrical input signal, the said plate being adapted to be brought into contact to the earth surface, comprising at least one means being adapted to measure the acceleration of the said plate and at least one means adapted to measure the acceleration of the reaction mass and means to derive corresponding force signals; at least a feedback loop for the said obtained force signals in order to be combined with the said input signal to the vibrator and the coupling plate.

A method for controlling of vibratory seismic sources comprising a coupling plate, comprising the steps of generating electrical input signals to a vibrator; measuring at least the accelerations of the coupling plate and of the reaction mass and deriving corresponding force signals; combining the said force signals and feeding the combined signal through a feedback loop to the said input signal to the vibrator.

FIG.1

FIG.2

- 1 -

SEISMIC VIBRATOR CONTROL

The invention relates to a method and an apparatus for seismic vibrator control for seismic wave sources used for seismic prospecting as energy sources.

In seismic prospecting several seismic wave sources can be used. An example of such a seismic wave source, is an electro-hydraulically controlled vibratory source, also called a vibrator.

In particular a vibrator control is used for controlling the vibratory force imparted to the ground.

These vibrators are known to those skilled in the art and will not be described in detail. Generally, it can be said that a vibrator comprises a piston affixed to a coaxial piston rod. The piston is located in a cylinder formed within a heavy reaction mass. Means are included for alternately introducing hydraulic fluid under high pressure to opposite ends of the cylinder, thereby imparting a motion to the piston relative to the reaction mass. The said means are actuated by a pilot signal and may for example comprise a power valve, a pilot valve, a pump, a torque motor etc. The piston rod extending from the reaction mass is rigidly coupled to a ground coupling (also called base plate) which is maintained in contact with the ground. The inertia of the reaction mass tends to resist displacement of the reaction mass relative to the earth. The piston motion is coupled through the piston rod and base plate to impart vibratory seismic energy into the earth.

Several ways of mounting a vibrator exist. One example of a suitable mounting is vehicle mounting.

When the vehicle has arrived at a selected location, the base plate is lowered into contact with the ground and to prevent decoupling of the base plate from the ground during operation, a portion of the vehicle's weight is applied to the base plate. The vehicle's weight is applied to the base plate

0069408

- 2 -

through spring members in such a way that a static bias force is imposed on the base plate, while the dynamic forces of the base plate are decoupled from the vehicle.

The vibrator can be driven by any way suitable for the purpose. These ways are known to those skilled in the art and will not be described in detail. As already indicated in the above, one of the ways to drive the vibrator is by means of a pilot signal which is connected to suitable means adapted to actuate the piston relative to the reaction mass.

Since the earth's impedance is varying at different locations, and the impedance is varying with frequency at a given location, the maximum vibrator base plate motion that can be generated while keeping the base plate in contact with the ground may vary depending on the soil conditions and the frequency. For a proper action of the device the base plate should not be decoupled from the ground. This can be done by controlling the force imparted to the ground, for example by trial and error; but this is not satisfactory.

Several systems for controlling the force imparted to the ground by a seismic vibrator have already been proposed. An example of such a system is a generation of a signal, which is related to the peak force imparted to the earth and the control signal amplitude is varied in response thereto to achieve the desired force magnitude. This may be done in several ways. One of these ways is the detection of the acceleration of the base plate and the acceleration of the reaction mass and generating therefrom a signal relating to the peak force transmitted by the base plate and displaying the said signal on a visible indicator device.

It has also been proposed to generate a signal proportional to force imparted to the base plate and utilize this signal in a feedback loop to vary the instantaneous drive level to the vibrator.

Further it has already been proposed to employ velocity feedback. By controlling the velocity of the vibrator coupling plate and of the injected seismic disturbance, the wave form of the resulting seismic signal is more accurately controlled. However, the known devices do not use the force signals of the base plate and the reaction mass in a feedback loop to control the phase or the amplitude of the input signal to the vibrator. The use of combined force signals for controlling the phase or amplitude of the said input signal has several advantages.

The signals which are imparted to the ground in this way are proportional to the reference signals and these are independent on external disturbances. So the "far-field" signal will be always equal to the reference signal (also in phase and amplitude).

Therefore it is an object of the present invention to provide an apparatus and a method for seismic vibrator control, which provide suitable signals being independent on external disturbances.

It is another object of the present invention to provide a method and apparatus for seismic vibrator control, which provide signals without loss of determined frequencies and signals, having a controlled phase and amplitude.

The invention therefore provides an apparatus for the control of a vibratory seismic source, said source comprising at least a vibrator provided with a reaction mass and a coupling plate, the movement of which is responsive to an electrical input signal, the said plate being adapted to be brought into contact to the earth surface, characterized by at least one means being adapted to measure the accelerations of the said mass and the said plate and means to derive corresponding force signals; at least a feedback loop for the said obtained force signals in order to be combined with the said input signal.

The invention further provides a method for controlling a vibratory seismic source comprising a coupling plate, characterized by the steps of generating electrical input signals to a vibrator; measuring at least the acceleration of the coupling plate and of the reaction mass of the vibrator and deriving corresponding force signals; combining the said force signals and feeding the combined signal through a back loop to the said input signals.

The invention will now be described by way of example in more detail with reference to the accompanying drawings, in which:

Fig. 1 represents schematically the principle of the invention;

Fig. 2 represents an embodiment of the invention in more detail.

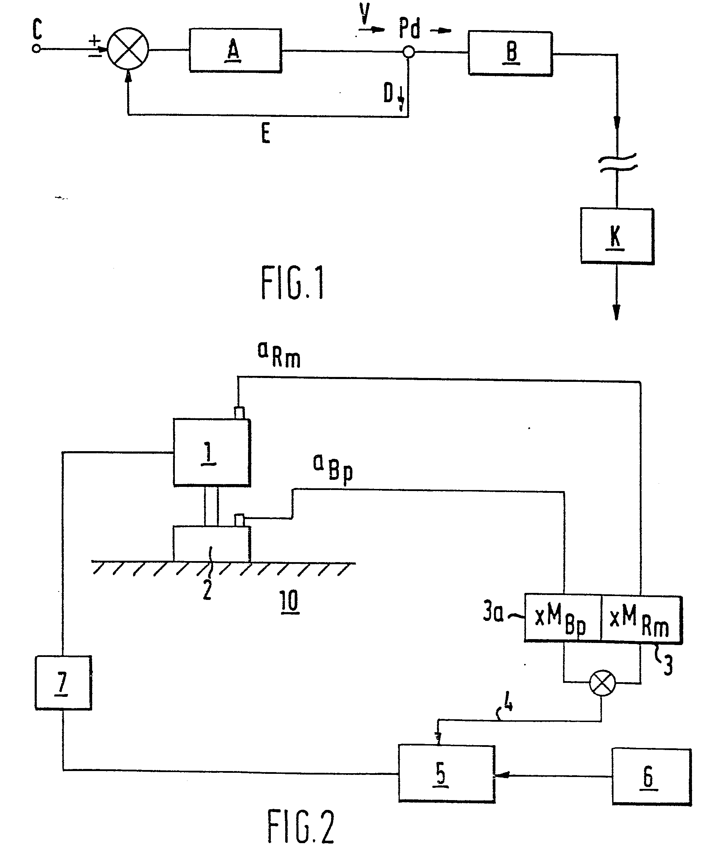

With reference to fig. 1 the block A represents schematically a vibrator. Such a vibrator comprises a reaction mass and a base plate (not shown since known per se), which is placed upon the earth and is adapted to impart vibratory seismic energy into the earth (schematically shown as block B). The vibrator is operated by a signal C, which is fed as an input signal to the vibrator. A force $P_d$ (schematically shown by the arrow V) is exerted on the earth through the base plate. The vibrations thus obtained are propagated in the earth and are received by suitable equipment such as a seismometer (schematically shown as the block K). The signals thus obtained are further processed in any way suitable for the purpose (not shown). From the base plate as well as from the reaction mass force signals D are obtained (schematically shown). These force signals are for example obtained by means of transducers (not shown) which may be mounted on the base plate and on the reaction mass. These force signals are fed through a feedback loop E in order to be combined with the input signal C. In this way a control of the input signal is obtained, leading to a compensation in phase and/or amplitude.

With reference to fig. 2 a more detailed embodiment of the invention has been shown.

In fig. 2 a vibrator provided with a base plate 2 and a reaction mass 1 has been represented schematically. The base plate 2 has been placed upon the earth surface 10. The vibrator has been provided with an accelerometer $a_{RM}$ which is adapted to measure the acceleration of the reaction mass. The base plate 2 has been provided with an accelerometer $a_{BP}$ which is adapted to measure its acceleration. The acceleration meters are connected through any means suitable for the purpose to a device 3, 3a (schematically shown) which is adapted to obtain a combined force signal. This signal is fed through a feedback loop 4 to a comparator 5. The comparator 5 is also connected to a pilot signal source 6. The comparator 5 compares the signals from the signal source 6 and from the loop 4 and provides a corrected signal to the vibrator-actuating system 7 (schematically shown) in order to make the base plate motion signal proportional to the pilot signal. The comparator 5 can compare the signals in several ways. For example the phase of the signals can be compared in order to provide correction-signals. Another possibility is to compare both the amplitude and the phase in order to provide correction-signals.

In an advantageous embodiment of the invention the means for measuring the force signals comprise transducers, mounted on the base plate and on the reaction mass respectively. However, it will be clear to those skilled in the art, that any force measuring means suitable for the purpose may be used.

The electrical input signal, which is used in the apparatus and method according to the invention may be any signal suitable for the purpose. An advantageous input signal is a frequency swept signal.

Various modifications of the invention will become apparent to those skilled in the art from the foregoing description and accompanying drawings. Such modifications are intended to fall within the scope of the appended claims.

- 6 -

C L A I M S

1. An apparatus for the control of a vibratory seismic source, said source comprising at least a vibrator provided with a reaction mass and a coupling plate, the movement of which is responsive to an electrical input signal, the said plate being adapted to be brought into contact to the earth surface, characterized by at least one means being adapted to measure the acceleration of the said plate and at least one means adapted to measure the acceleration of the reaction mass and means to derive corresponding force signals; at least a feedback loop for the said obtained force signals in order to be combined with the said input signal.

2. The apparatus as claimed in claim 1, characterized by a comparator which compares the input signal with the combined force signals.

3. The apparatus as claimed in claim 1 or 2, characterized in that the means for measuring the force signal comprises a transducer, mounted on the said plate.

4. The apparatus as claimed in any one of claims 1-3, characterized by a means for measuring the force signal, being mounted on the said reaction mass.

5. The apparatus as claimed in any one of claims 1-4, characterized in that the said input signal is a frequency swept signal.

6. A method for controlling a vibratory seismic source comprising a coupling plate, characterized by the steps of generating electrical input signals to a vibrator; measuring at least the accelerations of the coupling plate and of the reaction mass of the vibrator and deriving corresponding force signals; combining the said force signals and feeding the combined signal through a feedback loop to the said input signals.

7.    The method as claimed in claim 6, characterized by the step of comparing the input signal with the combined force signals.

8.    The method as claimed in claim 6 or 7 characterized in that the phase of the signals is compared.

9.    The method as claimed in claim 6, characterized by the step of comparing the amplitude and the phase of the signals.

FIG.1

FIG.2